# EUROPEAN PATENT APPLICATION

(11) **EP 2 899 925 A1**
(43) Date of publication of application: **29.07.2015**
(21) Application number: 12884920.5
(22) Date of filing: 19.09.2012
(51) Int. Cl.: H04L 12/46

(54) **INFORMATION PROCESSING DEVICE, STARTING DEVICE, STARTING SYSTEM, STARTING METHOD, AND PROGRAM**

(71) Applicant: Fujitsu Limited, Kawasaki-shi, Kanagawa 211-8588 (JP)
(72) Inventor: OHBITSU, Toshiro, Kawasaki-shi Kanagawa 211-8588 (JP)
(74) Representative: Fenlon, Christine Lesley
(86) International application number: PCT/JP2012/073959
(87) International publication number: WO 2014/045356

(57) **Abstract**

An information processing apparatus includes a storage configured to store an IP address of a router in association with identification information corresponding to each of first apparatuses, the router connecting a first network and a second network differing from the first network, the first apparatuses being connected to the second network, and a transmitter configured to transmit a predetermined packet including the identification information to the IP address of the router via the first network in response to reception of an operation request for a corresponding one of the first apparatuses, where the predetermined packet is used for transmitting a magic packet including a MAC address corresponding to the identification information included in the predetermined packet in the second network.

## Description

### TECHNICAL FIELD

The disclosures discussed herein relate to an information processing apparatus, an activating apparatus, an activating system, an activating method, and a program.

### BACKGROUND ART

Portable mobile terminals (hereinafter called "mobile terminals") such as smartphones may be able to connect from outside a home local area network (LAN) in user's homes to personal computers (PCs) and the like connected to the home LAN via a home router. Specifically, the mobile terminal transmits a data transmission request for transmitting data to a destination PC to a router's global address. The router computes a MAC address corresponding to a private address of the PC using an Address Resolution Protocol (ARP) table stored in advance, and forwards data to the computed MAC address. The ARP indicates a protocol for finding a MAC address from an IP address, and the ARP table indicates a correspondence table between the IP addresses and the MAC addresses. Note that a private address of each of the PCs may be specified by a network address port translation, and the like.

Note that the user generally switches off his or her home PC for electric energy saving. Hence, the user needs to activate the home PC in order to accesses the home PC from outside.

There is a related-art technology called Wake-on-LAN (hereinafter called "WOL") that enables remote-control operations (e.g., switch on and shut down) of the power of a personal computer (PC) via a local area network (LAN). In WOL, a special packet called a "magic packet" is transmitted. The magic packet includes a MAC address of a network card provided with the PC subjected to operations. The network card that includes its own MAC address is configured to switch on the power of the PC connected to the network.

Hence, such WOL may be used from a wide area network (WAN) outside a local area network (LAN) at home to activate a PC residing in the home.

The magic packet is normally broadcasted, and general-purpose routers normally have settings to discard, of the packets received from the WAN, the packets that initiate broadcasting.

On the other hand, when an IP address (a private address) and a MAC address of a PC subjected to activation are externally known, the magic packet may be unicasted with respect to that PC.

However, the routers regularly communicate with each of the PCs connected to the LAN to verify the presence of the PCs. The routers are configured to remove entries associated with those PCs that are no longer in communication from an address resolution protocol (ARP) table. As a result, even though the routers receive the magic packet addressed to the private address of the unactivated PC, the routers may be unable to acquire the MAC address corresponding to the private address from the ARP table. That is, the routers may become incapable of forwarding the magic packet.

Note that Japanese Laid-open Patent Publication No. 2005-109763 (hereinafter referred to as "Patent Document 1") discloses "a network system activated by responding to an activating instruction packet. The network system includes a local area network (LAN), a router connecting the LAN to the Internet, a server connected to the Internet, and a terminal connected to the Internet. The LAN includes an information apparatus, and a WOL device configured to transmit reporting packet addressed to the server serving as a transmission destination. The router is configured to convert an address described in the reporting packet. The server is configured to acquire a global IP address allocated to the router based on the converted address in the reporting packet to save the acquired global IP address in a database, and supply the acquired global IP address to the terminal in response to a request from the terminal. The terminal is configured to transmit an activation request packet to the WOL device via the router using the global IP address. The WOL device is configured to generate an activation instruction packet in response to the activation request packet to transmit the generated activation instruction packet to the information apparatus. The information apparatus is configured to be activated in response to the activation instruction packet" (see Claim 1 of Patent Document 1).

### RELATED ART DOCUMENTs

### PATENT DOCUMENTS

Patent Document 1: Japanese Laid-open Patent Publication No. 2005-109763
Patent Document 2: Japanese Laid-open Patent Publication No. 2010-093835

However, Patent Document 1 does not clarify the content of the "activation request packet". Hence, how the WOL device specifies an information apparatus subjected to activation remains unclear. In a case where the activation request packet indicates a magic packet, the general-purpose routers are configured to automatically remove the magic packet transmitted from the WAN as described above. Hence, the activation request packet may only be effective in the routers that have invalidated firewall functions.

### DISCLOSURE OF INVENTION

### PROBLEM TO BE SOLVED BY INVENTION

It is an object of the present invention to provide a technology capable of activating an apparatus connected to the LAN from outside the LAN.

### MEANS FOR SOLVING PROBLEMS

According to an aspect of an embodiment, there is provided an information processing apparatus that includes a storage configured to store an IP address of a router in association with identification information corresponding to each of first apparatuses, the router connecting a first network and a second network differing from the first network, the first apparatuses being connected to the second network; and a transmitter configured to transmit a predetermined packet including the identification information to the IP address of the router via the first network in response to reception of an operation request for a corresponding one of the first apparatuses, where the predetermined packet is used for transmitting a magic packet including a MAC address corresponding to the identification information included in the predetermined packet in the second network.

### EFFECT OF INVENTION

According to an aspect of embodiments, the technology disclosed herein may be capable of activating apparatuses connected to a local area network (LAN) from outside the LAN.

### BRIEF DESCRIPTION OF DRAWINGS

FIG. 1 is a diagram illustrating a configuration example of a remote control system of an embodiment;
FIG. 2 is a diagram illustrating a hardware configuration example of a server apparatus in the embodiment;
FIG. 3 is a diagram illustrating a hardware configuration example of an activating apparatus in the embodiment;
FIG. 4 is a diagram illustrating functional configuration examples of the server apparatus, and the activating apparatus in the embodiment;
FIG. 5 is a sequence diagram illustrating an example of an initial setting process;
FIG. 6 is a diagram illustrating a configuration example of a group information table;
FIG. 7 is a sequence diagram illustrating an example of a process to be executed for remotely controlling a personal computer (PC) from a communications terminal;
FIG. 8 is a sequence diagram illustrating an example of a process to be executed after activation of the PC;
FIG. 9 is a flowchart illustrating an example of a process to be executed by the activating apparatus;
FIG. 10 is a diagram illustrating a first example of a physical connection configuration of the activating apparatus; and
FIG. 11 is a diagram illustrating a second example of the physical connection configuration of the activating apparatus.

### BEST MODE FOR CARRYING OUT THE INVENTION

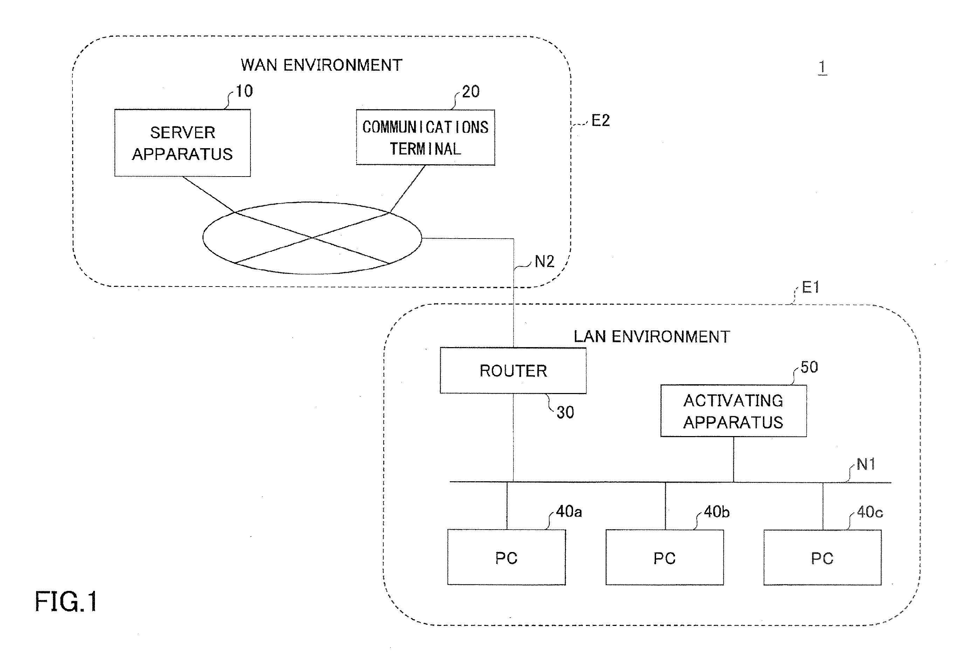

In the following, a description is given of embodiments with reference to accompanying drawings. FIG. 1 is a diagram illustrating a configuration example of a remote control system of an embodiment. In a remote control system 1 illustrated in FIG. 1, a local area network (LAN) environment E1 may serve as a user's home network environment for a communications terminal 20 included in a wide area network environment E2.

In the LAN environment E1, a router 30, one or more personal computers (PCs) 40 such as a PC 40a, PC 40b and a PC 40c, and an activating apparatus 50 are communicatively connected to one another via a network N1 such as a wired or a wireless LAN. Note that the PC 40a, the PC 40b, or the PC 40c may be generically referred to as a "PC 40" when the individual PCs need not be identified.

The router 30 may be a broadband router 30. The router 30 is configured to relay communications between the PCs 40, or between the PC 40 and the activating apparatus 50. The router 30 is also configured to connect the network N1 serving as a local area network (LAN) in the LAN environment E1, and a network N2 serving as a wide area network (WAN) in a WAN environment E2. That is, the router 30 forms an interface between the LAN environment E1 and the WAN environment E2.

The PC 40 is a general-purpose PC 40. However, the PC 40 may preferably be configured such that the power of the PC 40 is remotely controllable, such as a Wake-on-LAN ("WOL") compatible PC. The router 30 may, for example, allocate a private address, i.e., an IP address unique in the LAN environment E1, to each of the PCs 40 at the activation of the PC 40. Hence, the private address of each PC 40 changes every time the PC 40 is activated.

The activating apparatus 50 is configured to activate the power-off mode PC 40 in response to a request from the WAN environment E2. The power-off mode includes a sleep mode (a suspend mode) or a pause mode. Basically, the activating apparatus 50 is continuously activated. That is, the power is constantly being supplied to the activating apparatus 50. This indicates that the private address of the activating apparatus 50 basically remains unchanged.

The WAN environment E2 is a network environment outside the LAN environment E1. In the WAN environment E2, a server apparatus 10 and a communications terminal 20 are configured to communicate with each other via a network such as the Internet, and the like. The communications terminal 20 may be an information processing apparatus having a communications function, such as a mobile phone, a smartphone, a personal digital assistance (PDA), and a notebook PC. Note that the communications terminal 20 is not necessarily a mobile type. For example, an on-vehicle PC or a desk-top type PC may be used as the communications terminal 20.

The server apparatus 10 is configured to transmit an operation request for operating the PC 40 in the LAN environment E1 in response to a request from the communications terminal 20. In this embodiment, the server apparatus 10 is configured to execute a process for activating the power-off PC 40 in response to the request from the communications terminal 20.

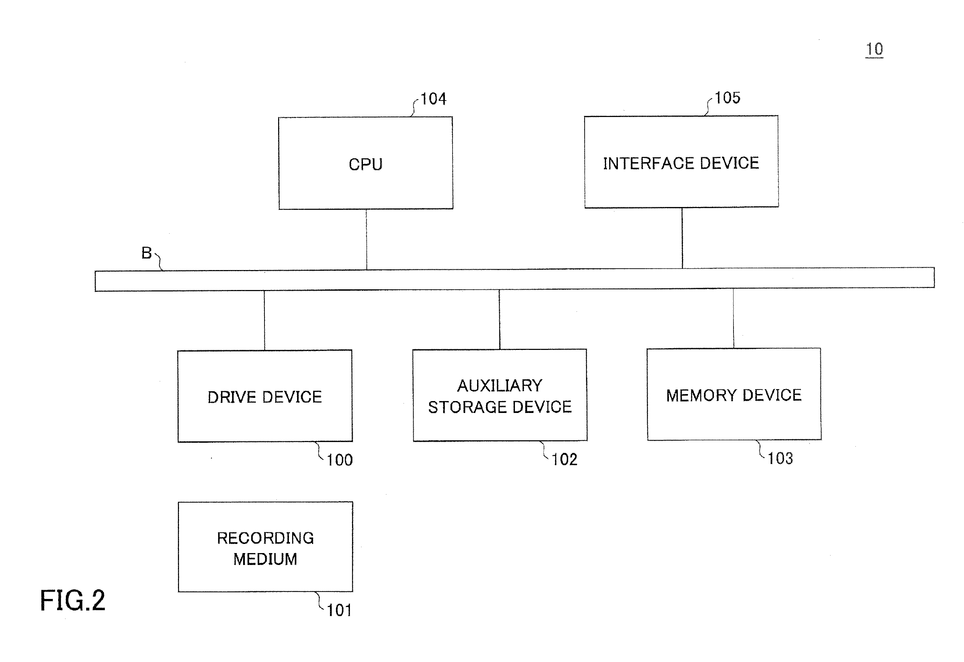

FIG. 2 is a diagram illustrating a hardware configuration example of the server apparatus 10 in the embodiment. The server apparatus 10 of FIG. 2 includes a drive device 100, an auxiliary storage device 102, a memory device 103, a CPU 104, and an interface device 105.

Programs implementing processes of the server apparatus 10 are provided via a recording medium 101. When the recording medium 101 storing the programs is set in the drive device 100, the programs are installed from the recording medium 101 into the auxiliary storage device 102 via the drive device 100. Note that the programs are not necessarily installed from the recording medium 101, and may be downloaded from another computer via a network. The auxiliary storage device 102 is configured to store the installed programs as well as storing necessary files, data, and the like.

The memory device 103 is configured to read the programs from the auxiliary storage device 102 and store the read programs when receiving instructions to activate the programs. The CPU 104 is configured to implement functions associated with the server apparatus 10 in accordance with the programs stored in the memory device 103. The interface device 105 is configured to serve as an interface for connecting the server apparatus 10 to the network.

Note that examples of the recording medium 101 include portable recording media such as a CD-ROM, a DVD disk, and a USB memory. Further, examples of the auxiliary storage device 102 include a hard disk drive, a flash memory, and the like. Each of the recording medium 101 and the auxiliary storage device 102 corresponds to a computer-readable recording medium.

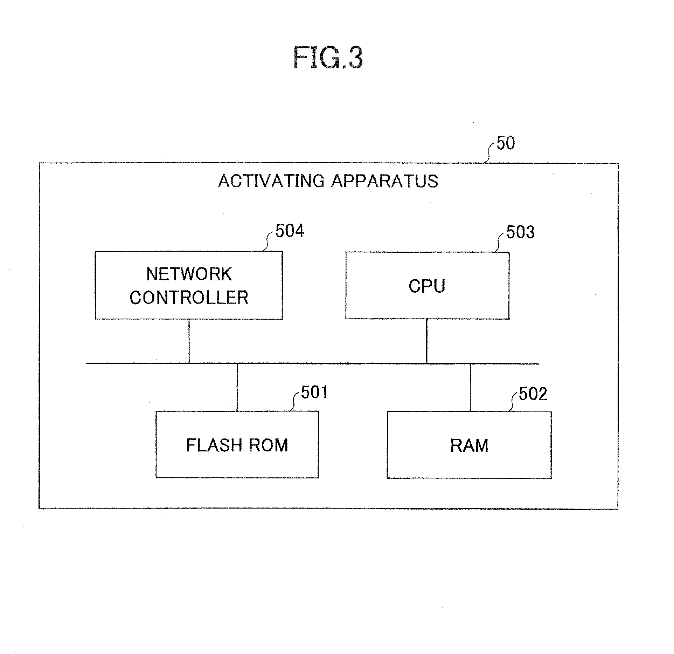

FIG. 3 is a diagram illustrating a hardware configuration example of the activating apparatus in the embodiment. The activating apparatus 50 of FIG. 3 includes a flash ROM 501, a RAM 502, a CPU 503, and a network controller 504 that are connected to one another via a bus.

The programs implementing processes in the activating apparatus 50 are stored in the flash ROM 501. The flash ROM 501 is configured to store the programs as well as storing necessary data, and the like.

The RAM 502 is configured to read the programs from the flash ROM 501 and store the read programs when receiving instructions for activating programs (program activation instructions). The CPU 503 is configured to implement functions associated with the activating apparatus 50 in accordance with the programs stored in the RAM 502. The network controller 504 is configured to serve as an interface for connecting the activating apparatus 50 to the network N1. The network controller 504 may be a network interface card (NIC).

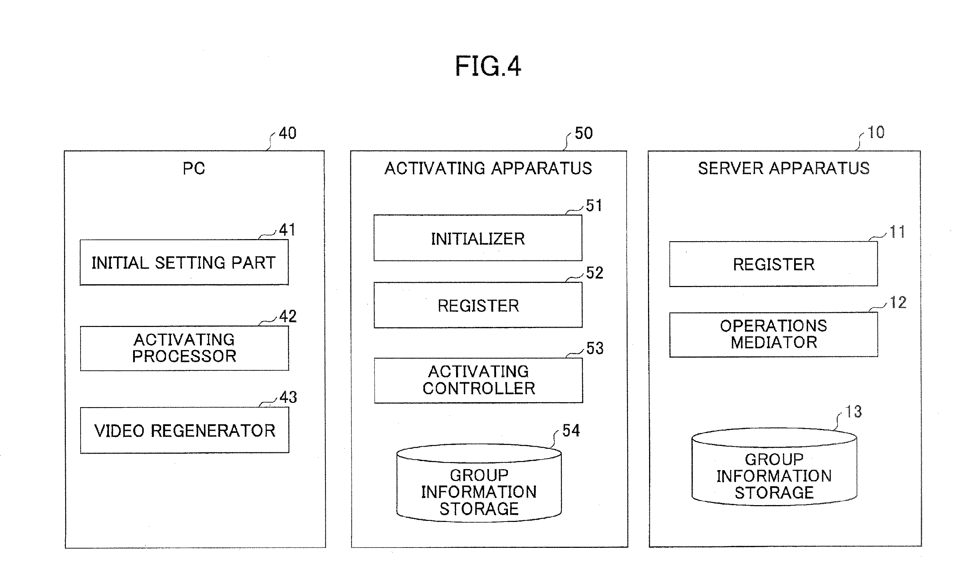

FIG. 4 is a diagram illustrating functional configuration examples of the activating apparatus 50, and the server apparatus 50 in the embodiment. In FIG. 4, the PC 40 includes an initial setting part 41, an activating processor 42, and a video regenerator 43. The above functional components may be implemented by one or more programs installed in the PC 40 that cause a CPU 40 to execute processes. The initial setting part 41 is configured to execute setting processes that need to be performed in advance to allow the PC 40 to be remotely controlled. The activating processor 42 is configured to activate the PC 40. The video regenerator 43 is configured to regenerate video data saved in the PC 40.

The activating apparatus 50 includes an initializer 51, a register 52, and an activating controller 53. The above functional components may be implemented by one or more programs installed in the flash ROM 501 of the activating apparatus 50 that causes a CPU 503 to execute processes. The activating apparatus 50 further includes a group information storage 54. The group information storage 54 may be implemented by using the flash ROM 501.

The initializer 51 is configured to execute an initializing process at activation of the activating apparatus 50. The register 52 is configured to register information with respect to the group information storage 54. The activating controller 53 is configured to perform activation control of the PC 40 specified in a specific packet (hereinafter called the "specific packet") in response to reception of the specific packet that is transmitted by the server apparatus 10, and then forwarded by the router 30. The activation control is performed by transmitting a magic packet of the WOL. The group information storage 54 is configured to store correspondence information between identification information included in the specific packet and a MAC address of the PC 40.

The server apparatus 10 includes a register 11, and an operations mediator 12. The above components may be implemented by one or more programs installed in the server apparatus 10 that causes a CPU 104 to execute processes. The server apparatus 10 further utilizes a group information storage 13. The group information storage 13 may be implemented by utilizing a storage device, and the like that are connected, for example, to the auxiliary storage device 102 or the server apparatus 10 via a network.

The register 11 is configured to register information with respect to the group information storage 13. The group information storage 13 is configured to store information similar to that stored in the group information storage 54 of the activating apparatus 50. The operations mediator 12 is configured to mediate, in response to an operation request for operating the PC 40 from the communications terminal 20, a process that causes the PC 40 to execute operations content specified in the operation request.

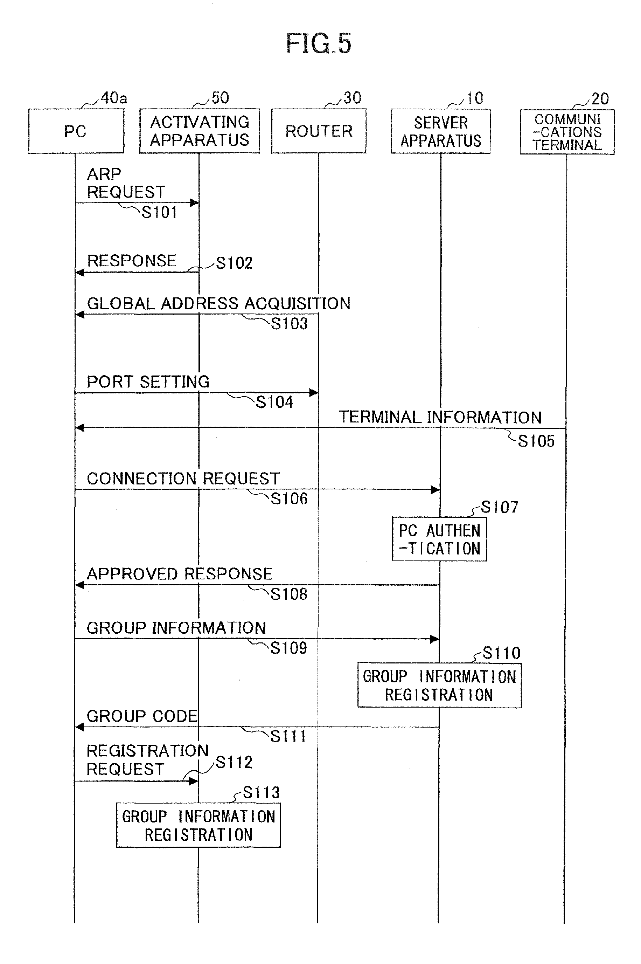

In the following, a description is given of a process to be executed in the remote control system 1. FIG. 5 is a sequence diagram illustrating an example of an initial setting process. The initial setting process indicates a setting process necessary for enabling the PC 40 in the LAN environment E1 to be remotely controlled from the communications terminal 20 in the WAN environment E2. Note that in this embodiment the PC 40a is subjected to being remotely controlled. Further, in the initial setting process, the communications terminal 20 may be installed in the LAN environment E1, and may be configured to be in communication with the PC 40a.

The initial setting part 41 of the PC 40a may initiate a process in response to input of an instruction from a user. In step S101, the initial setting part 41 transmits an ARP request for detecting the activating apparatus 50 within the LAN environment E1. The ARP request specifies a private address of the activating apparatus 50. The private address may be set in advance in the PC 40a. The activating apparatus 50 is basically activated continuously. Hence, the network controller 504 of the activating apparatus 50 responds to the ARP request, and transmits a MAC address of the activating apparatus 50 to the initial setting part 41 by return (step S102).

Note that steps S101 and 102 may be performed in accordance with Universal Plug and Play (UPnP). That is, the activating apparatus 50 may be made compatible with UPnP, and the initial setting part 41 may acquire the MAC address of the activating apparatus 50 via intercommunications in accordance with UPnP.

Subsequently, the initial setting part 41 acquires from the router 30 an IP address (a global address) of the router 30 via intercommunications in accordance with UPnP (step S103). Subsequently, the initial setting part 41 sets the router 30 for mapping (routing) a specific packet from the server apparatus 10 to a port connected to the activating apparatus 50 (step S104). For example, the specific packet may be distinguished from other packets based on a port number that is set in the specific packet. That is, in step S104, the router 30 may alternatively be set for mapping the packet having a specific port to a port connected to the activating apparatus 50. Further, step S104 may be performed via the intercommunications in accordance with UPnP.

Note that the embodiment describes the example of the UPnP compatible router 30 because the UPnP compatible router is a general-purpose router. However, the global address of the router 30 may be acquired in accordance with a specification or communications protocols other than UPnP.

Subsequently, the initial setting part 41 acquires terminal information of the communications terminal 20 via communications with the communications terminal 20 (step S105). The communications information is not limited to specific information insofar as the information may identify the communications terminal 20. For example, a fabrication ID, a MAC address, or the like of the communications terminal 20 may be used as the terminal information.

Subsequently, the initial setting part 41 transmits a connection request to the server apparatus 10 (step S106). Note that communications between the initial setting part 41 and the server apparatus 10 are relayed by the router 30; however, an illustration of such relay communications is omitted from the specification for convenience. The connection request includes identification information of the PC 40a including the initial setting part 41. The identification information is not limited to specific information insofar as the identification information may identify the PC 40a. For example, the fabrication ID, the MAC address, or the like of the communications terminal 20 may be used as the identification information.

The register 11 of the server apparatus 10 authenticates the PC 40a serving as a connection request source based on the identification information (step S107). For example, the identification information of the PC 40a to which the communications terminal 20 will be given access permission to connect may be stored in advance in the auxiliary storage device 102 of the server apparatus 10. Then, the register 11 of the server apparatus 10 authenticates the PC 40a by matching the identification information stored in the auxiliary storage device 102 of the server apparatus 10 and the received identification information. When the authentication is successful, the register 11 transmits an approval response indicating the access permission to the initial setting part 41 by return (step S108).

Subsequently, the initial setting part 41 transmits the global address of the router 30, the MAC address of the PC 40a, the terminal information, and the MAC address of the activating apparatus 50 to the server apparatus 10 (step S109). The register 11 of the server apparatus 10 registers the received information in a group information table 13T corresponding to the global address of the router 30 (step S110). Note that the group information table 13T is stored by the group information storage 13 in association with the global address of the router 30.

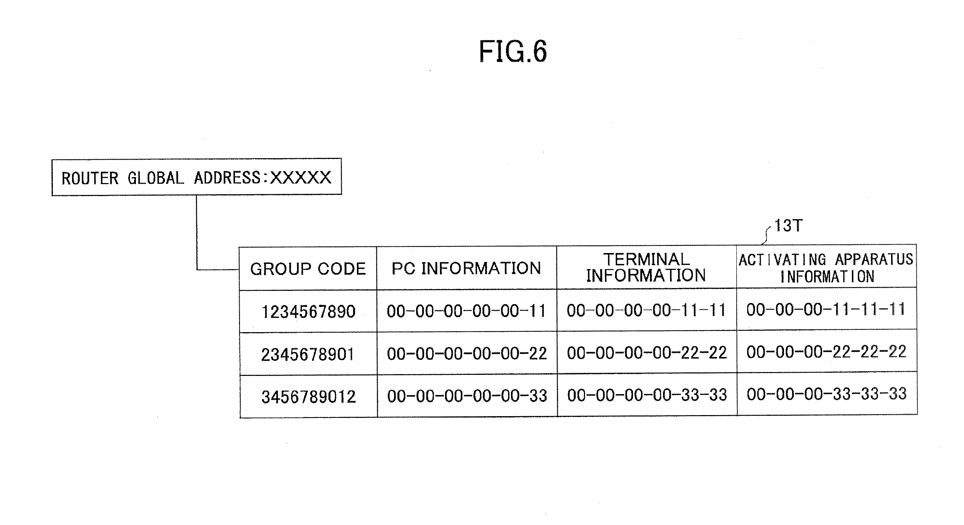

FIG. 6 is a diagram illustrating a configuration example of the group information table. In FIG. 6, each record of the group table 13T includes items of a group code, PC information, terminal information, and activating apparatus information.

The group code is identification information of each record of the group information table 13T as well as identification information of group information. The PC information is the MAC address of the PC 40a. The terminal information is terminal information of the communications terminal 20. The activating apparatus information is a MAC address of the activating apparatus 50.

In step S110, a new record is generated in the group information table 13T corresponding to the received global address, and a group code is assigned to the generated record. The MAC address of the PC 40a, the terminal information, and the MAC address of the activating apparatus 50 received in step S109 are stored in PC information, terminal information, and activating apparatus information of the generated record. Note that information stored in one record of the group information table 13T is hereinafter called "group information".

Subsequently, the register 11 transmits a group code corresponding to newly stored group information to the initial setting part 41 by return (step S111).

Subsequently, the initial setting part 41 transmits a registration request for registering the returned group code, the MAC address of the PC 40a, the terminal information, and the MAC address of the activating apparatus 50 to the activating apparatus 50 (step S112). Note that the MAC address of the activating apparatus 50 is not necessarily included in the registration request.

Subsequently, the register 52 of the activating apparatus 50 stores the received information in association with the group information storage 54 in the group information storage 54 (step S113). Note that a configuration of the group information storage 54 may be similar to that of the group information table 13T illustrated in FIG. 6. However, the group information storage 54 is not necessarily in association with the global address of the router 30. Further, the group information storage 54 does not need to store the terminal information and the activating apparatus information. In other words, the group information storage 54 may only store the group code in association with the PC information.

Note that settings of the group information with respect to the server apparatus 10, or settings of the group information storage with respect to the activating apparatus 50 may be conducted by other methods such as manual operations of the user.

The initial setting process ends accordingly. Subsequently, an illustration is given of a process to be executed for remotely controlling the PC 40a in the LAN environment E1 from the communications terminal 20 in the WAN environment E2.

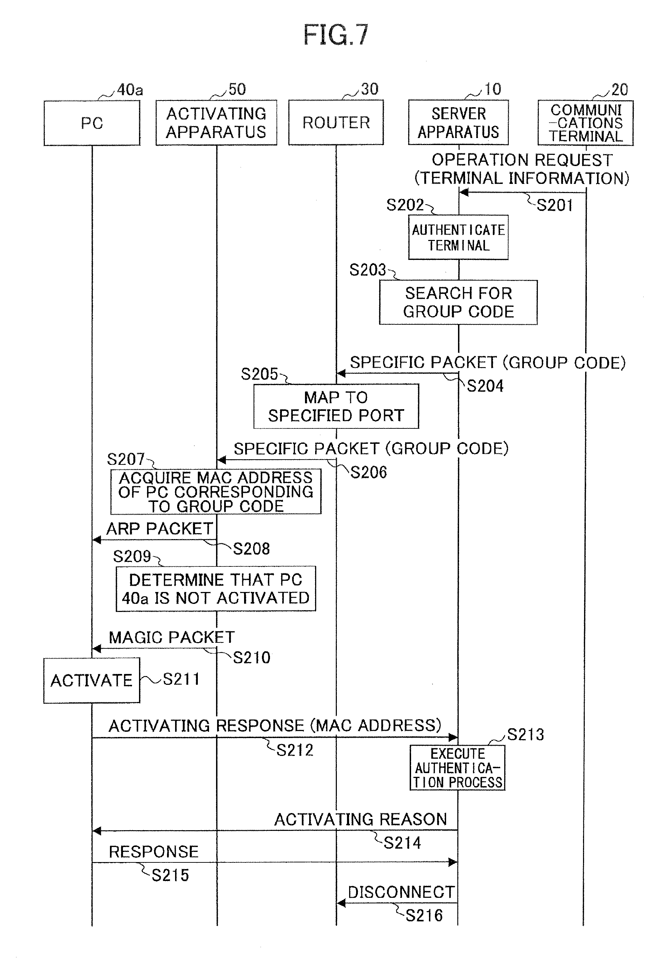

FIG. 7 is a sequence diagram illustrating an example of a process to be executed for remotely controlling the PC 40a from the communications terminal 20.

In step S201, the communications terminal 20 transmits an operation request for operating the PC 40a to the server apparatus 10 in response to an instruction for an operation given by the user (step S201). The operation request specifies terminal information of the communications terminal 20. The operation request further includes information indicating an operation content such as regenerating videos or saving image data (saved from the communications terminal 20 into the PC 40a). In this embodiment, the operation request specifies regenerating videos.

Subsequently, the operations mediator 12 of the server apparatus 10 authenticates terminal information specified in the operation request in response to reception of the operation request for operating the PC 40a (step S202). For example, in a case where the terminal information is included in a list of the terminal information stored in the auxiliary storage deice 102, the communications terminal 20 is successfully authenticated.

In a case where the communications terminal 20 is successfully authenticated, the operations mediator 12 searches the group information table 13T (FIG. 6) stored in the group information storage 13 for the group code associated with the terminal information (step S203). Specifically, the operations mediator 12 searches the group information table 13T for the group code stored in the record that includes the terminal information. Hence, associating the communications terminal 20 with the PC 40a in advance may facilitate the specification of the PC 40 subjected to operations at the transmission of the operation request from the communications terminal 20.

When the group code is detected, the operations mediator 12 transmits a specific packet to the global address of the router 30 associated with the group information table 13T including the record storing the group code (step S204). The specific packet specifies the detected group code. Note that the specific packet in this case indicates a specific packet mapped to the activating apparatus 50 that is set in the router 30 in step S104 of FIG. 5.

When receiving the specific packet, the router 30 outputs the specific packet to the port mapped in the specific packet set in step S104 of FIG. 5. As a result, the specific packet is transferred to the activating apparatus 50 (step S206). Note that the specific packet is not the magic packet of WOL, and is not mapped in the broadcast address. Hence, the specific packet may pass through the router 30.

Note that the router 30 verifies the presence or absence of an output destination for a specific packet mapped in advance to a specific packet based on the ARP table included in the router 30. Specifically, the settings associated with the specific packet to be mapped to the activating apparatus 50 include a MAC address of the activating apparatus 50. Accordingly, the router 30 verifies whether the MAC address is stored in the ARP table. In a case where the MAC address is stored in the ARP table, the router 30 outputs the specific packet to the mapped port. In a case where the MAC address is not stored in the ARP table, the router 30 discards the specific packet. However, basically, the activating apparatus 50 is continuously activated. Hence, it is very unlikely that the MAC address of the activating apparatus 50 is not stored in the ARP table of the router 30. Accordingly, the specific packet is transferred to the activating apparatus 50 unless otherwise specified.

The activating controller 53 of the activating apparatus 50 acquires the MAC address of the PC 40a associated with the group code included in the specific packet from the group information storage 54 in response to reception of the specific packet (step S207). Subsequently, the activating apparatus 50 broadcasts the ARP packet (step S208). The ARP packet specifies the IP address associated with the MAC address in the ARP table included in the activating apparatus 50. Hence, the activating controller 53 may be able to determine whether the PC 40a is activated based on whether a response from the PC 40a is acquired. In a case where the activating controller 53 does not receive a response from the PC 40a after a predetermined time has elapsed, the activating controller 53 determines that the PC 40a is not activated (step S209).

Hence, the activating controller 53 generates a magic packet including the MAC address of the PC 40a, and broadcasts the magic packet to the network N1 (step S210). The network card of the PC 40a that has received the magic packet inputs an activating signal into the PC 40a. The activating processor 42 of the PC 40a activates the PC 40a (step S211).

When the activating processor 42 of the PC 40a is activated by the magic packet, the activating processor 42 transmits an activating response for reporting the activation of the PC 40a to the server apparatus 10 (step S212). The activating response specifies the MAC address of the PC 40a.

The operations mediator 12 of the server apparatus 10 authenticates the PC 40a, serving as a transmission source of the activating response, in response to reception of the activating response (step S213). For example, whether the MAC address specified in the activating response is associated with the group code detected in step S203 may be determined by referring to the group information. In a case where the MAC address specified in the activating response is associated with the detected group code, the authentication of the PC 40a is successful. That is, the PC 40a is verified as the PC 40 that is subjected to operations by the communications terminal 20.

When the authentication is successful, the operations mediator 12 transmits an activating reason to the PC 40a (step S214). The activating reason is information indicating the reason for activating the PC 40a. In this embodiment, information indicating regeneration of videos is transmitted as the activating reason.

Subsequently, the activating processor 42 of the PC 40a transmits a response indicating successful reception of the activating reason by return (step S215). Subsequently, the operations mediator 12 of the server apparatus 10 disconnects a communication (a session) from the router 30 (step S216). That is, the session is temporarily disconnected before execution of an operation requested from the communication terminal 20. This is because the session established by the request from the WAN environment E2 may become a security hall.

Note that the specific packet may specify not the group code, but the group information associated with the group code or PC information included in the group information. In such a case, the activating apparatus 50 does not necessarily include the group information storage 54. This is because the activating apparatus 50 is able to acquire the MAC address of the PC 40a from the PC information of the specific packet in step S207. However, as described in this embodiment, including the group record in the specific packet may reduce the cases of allowing the MAC address of the PC 40a to circulate outside the LAN environment E1.

Subsequently, a description is given of a process to be executed after the activation of the PC 40a, that is, the process to be executed subsequent to FIG. 7.

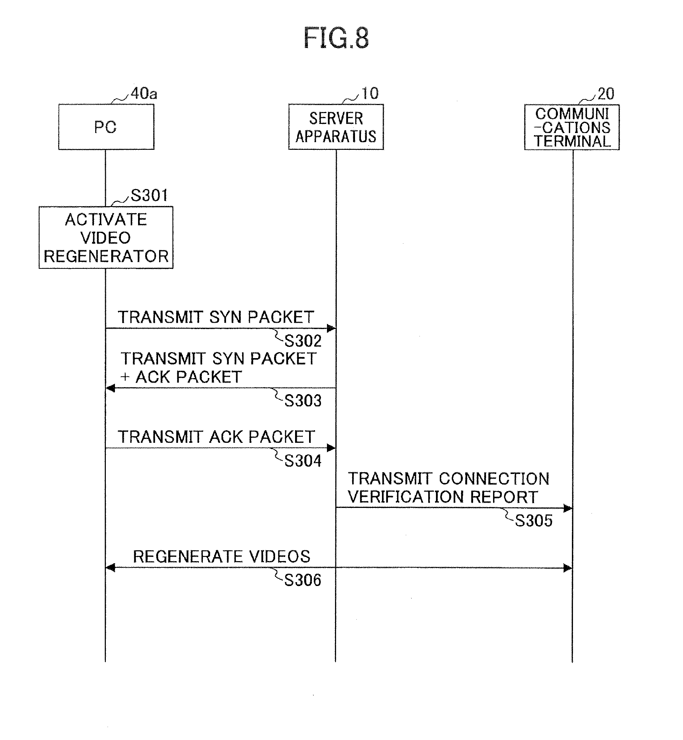

FIG. 8 is a sequence diagram illustrating an example of a process to be executed after the activation of the PC. Note that FIG. 8 illustrates a case where the activating reason reported in step S214 of FIG. 7 is information indicating video regeneration. Note also that in FIG. 8, communications between the PC 40a, and the server apparatus 10 and the communications terminal 20 belonging to the WAN environment E2 are conducted via the router 30; however, an illustration of the router 30 is omitted from FIG. 8 for convenience.

In step S301, the PC 40a activates the video regenerator 43 in response to the activating reason. Note that the video regenerator 43 executes the process based on the communications with the communications terminal 20 via the server apparatus 10. Hence, the video regenerator 43 executes a TCP connection open-process between the server apparatus 10 and the PC 40a.

Initially, the video regenerator 43 transmits a TCP packet in which an SYN flag indicating an open request is set in the operations mediator 12 of the server apparatus 10 (step S302). The operations mediator 12 of the server apparatus 10 transmits a TCP packet including an ACK flag or the like indicating a response to the open request and the SYN flag indicating the open request from the operations mediator 12 in response to reception of the TCP packet (step S303). The video regenerator 43 verifies whether the open request transmitted in step S302 is normally received in response to reception of the TCP packet. In this case, the video regenerator 43 transmits to the operations mediator 12 the TCP packet including the ACK flag indicating a response to the open request from the operations mediator 12 (step S304).

The open process ends thereafter. In response to the end of the open process, the operations mediator 12 of the server apparatus 10 transmits a connection verification report to the communications terminal 20 serving as the transmission source of the operation request in step S201 (step S305). The connection verification report refers to a report indicating that the connection between the PC 40a subjected to operations and the communications terminal 20 is verified.

The communications terminal 20 may be able to regenerate any video data saved in the PC 40a by communicating with the video regenerator 43 via server apparatus 10 in response to the connection verification report (step S306). As a result, the user may be able to watch regenerated results of the video data saved in the PC 40a via a display part of the communications terminal 20.

Note that an operation configuration of the PC 40a is not limited to regeneration of video data. The operation configuration of the PC 40a may be display of static image data, editing other electronic data, and the like. Further, the operation configuration of the PC 40a may be copying the data saved in the communications terminal 20 and pasting the copied data in the PC 40a.

Moreover, in the above-described description, the PC 40a is subjected to operations. However, in a case where a desired one of the PC 40b, the PC 40c, and the like is subjected to operations, processes illustrated in FIGS. 5, 7, and 8 may be applied to a corresponding one of the PC 40b, the PC 40c, and the like.

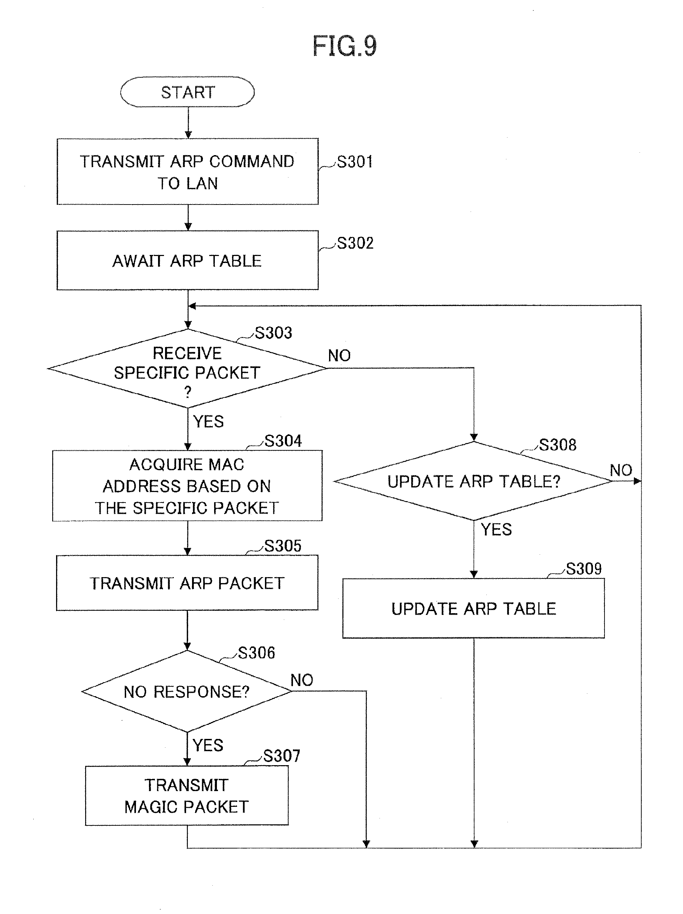

Subsequently, an illustration is given with reference to a flowchart of processes executed by the activating apparatus 50 in FIGS. 5 and 7. FIG. 9 is a flowchart illustrating an example of a process to be executed by the activating apparatus 50.

When the power is supplied to the activating apparatus 50, the initializer 51 of the activating apparatus 50 transmits an ARP command over the network of the LAN environment E1 (step S301). Subsequently, the initializer 51 generates the ARP table (step S302). Note that steps S301 and S302 are generally-used processes performed in each of the apparatuses connected to the LAN.

Subsequently, the activating controller 53 awaits reception of the specific packet from the router 30 (step S303). When receiving the specific packet ("YES" in step S303), the activating controller 53 acquires the MAC address associated with the group code included in the specific packet from the group information storage 54 (step S304). Subsequently, the activating apparatus 50 transmits the ARP packet to the private address corresponding to the MAC address (step S305). When the activating controller 53 does not receive a response after a predetermined time has elapsed ("YES" in step S306), the activating controller 53 broadcasts the magic packet including the MAC address to the network N1 (step S307). As a result, the PC 40 associated with the MAC address is activated.

At the same time, the initializer 51 regularly issues an ARP command to update the ARP table (steps S308 and S309).

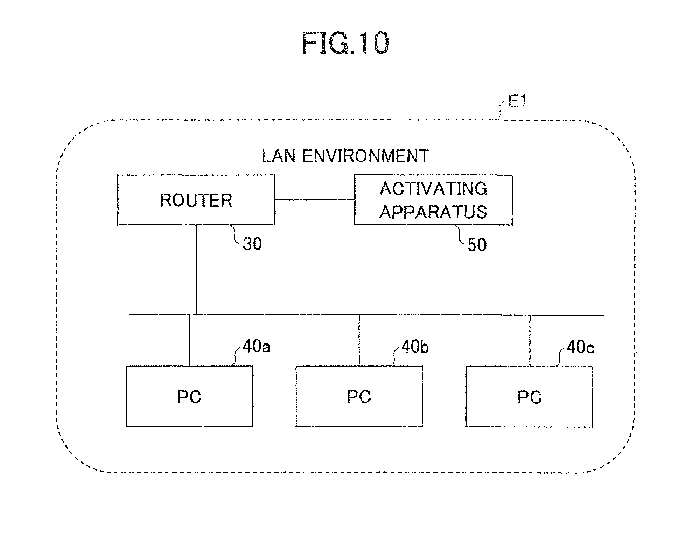

Subsequently, an illustration is given of an example of a physical connection configuration of the activating apparatus 50 in the LAN environment E1. FIG. 10 is a diagram illustrating a first example of the physical connection configuration of the activating apparatus 50.

In FIG. 10, the activating apparatus 50 is connected by the router 30 and a wired LAN. In this case, the specific packet is transmitted to the activating apparatus 50 via the wired LAN. The activating apparatus 50 transmits a magic packet via the wired LAN and the router 30. Electricity may be supplied from the router 30 to the activating apparatus 50 via the wired LAN. For example, power over Ethernet (PoE, registered trademark) may be used for such electricity supply to the activating apparatus 50.

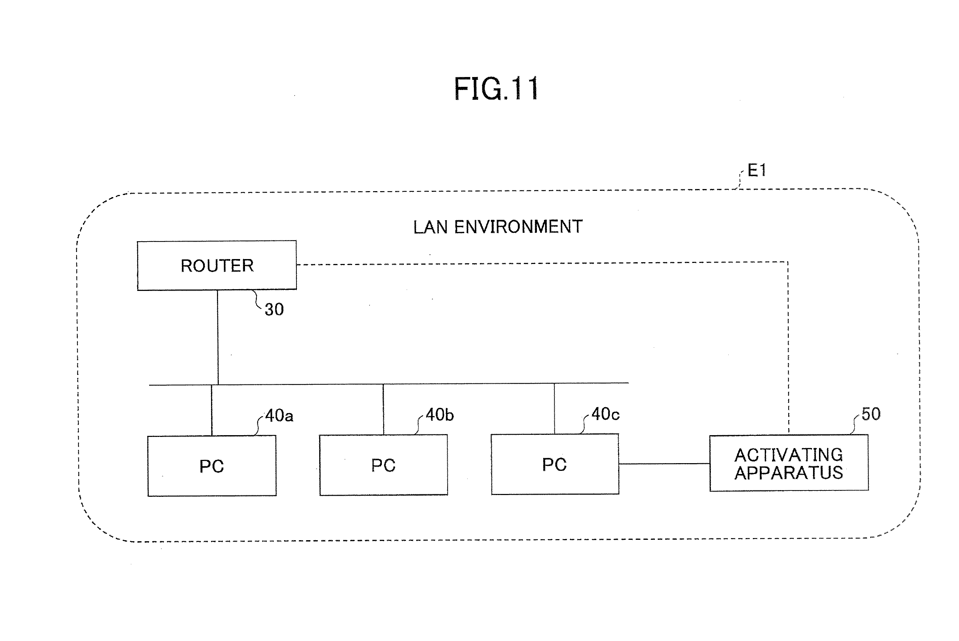

FIG. 11 is a diagram illustrating a second example of the physical connection configuration of the activating apparatus 50.

In FIG. 11, the activating apparatus 50 is connected by the router 30 and a wireless LAN. That is, in FIG. 11, a broken line connecting the router 30 and the activating apparatus 50 indicates the wireless LAN. In this case, the specific packet is transmitted to the activating apparatus 50 via the wireless LAN. The activating apparatus 50 transmits a magic packet via the wireless LAN and the router 30. Electricity may be supplied to the activating apparatus 50 from any one of the PCs 40 (the PC 40c in the example of FIG. 11). For example, although the PC 40c itself is in a suspended mode, the USB interface of the PC generally has a function to supply power. Hence, electricity may be supplied to the activating apparatus 50 via the USB interface of the PC 40c.

Further, the activating apparatus 50 does not necessarily include an independent housing. For example, the activating apparatus 50 may be moduled, and the moduled activating apparatus 50 may be installed within a housing of each of the PCs 40, or a housing of the router 30. In this case, communications between the moduled activating apparatus 50 and the PC 40 or the router 30 having the moduled activating apparatus 50 may be conducted not via the LAN but via the USB interface, or the like.

As described above, according to the present embodiment, the specific packet from the server apparatus 10 in the WAN environment E2 is transferred to the activating apparatus 50 in the LAN environment E1. The activating apparatus 50 generates a magic packet including the MAC address corresponding to the group code included in the specific packet, and transmits the generated magic packet to the network of the LAN environment E1. Accordingly, it may be possible to activate (turn on the power of) the PC 40 corresponding to the MAC address from the WAN environment E2.

Further, the specific packet specifies not the private address but the group code as identification information of the PC 40 subjected to operations. The group code is associated with the MAC address in the activating apparatus 50. Hence, in the LAN environment E1, it may be possible to activate a desired one of the PCs 40 even though the private addresses of the PCs 40 are dynamically changed.

Further, the specific packet specifies not the MAC address of the PC 40 subjected to activation but the group code associated with the MAC address. Hence, it may be possible to reduce cases of allowing the MAC address serving as information unique to each PC 40 to circulate in the WAN environment E2. As a result, it may be highly possible to prevent unauthorized activities using the MAC address.

Further, the specific packet is not a magic packet. Hence, the specific packet may be transmitted while the effective firewall function of the general-purpose router 30 remains unchanged. Accordingly, it may be possible to prevent the firewall function of the router 30 from lowering, which may be caused by implementing the embodiment.

Moreover, the activating apparatus 50 does not include an easily writable auxiliary storage device such as a hard disk. Hence, even though a devious program or the like is introduced by any chance in the activating apparatus 50 from outside the LAN environment E1, it may be possible to reduce cases where the devious program is written in the activating apparatus 50.

Note that in this embodiment, a next generation IP protocol such as IPv6 may be used. The magic packet is effective with the IPv6, and hence, it may be possible to use the activating apparatus 50 with the next generation IP protocol.

Moreover, the embodiment describes an example where the PC 40 serves as the communications apparatus subjected to activation. However, the embodiment is not limited to this example. Other communications apparatuses such as home electric appliances having communication functions may be subjected to activation insofar as these communications apparatuses are compatible with the WOL.

Note that in the above embodiment, the server apparatus 10 is an example of an information processing apparatus. The operations mediator 12 is an example of a transmitter or a first transmitter. The activating controller 53 is an example of a transmitter or a second transmitter.

The embodiments of the present invention are described above. However, the present invention is not limited to the specifically disclosed embodiments, and variations and modifications may be made without departing from the scope of the present invention.

### EXPLANATION OF REFERENCE NUMERALS

- 1: remote operation system
- 10: server apparatus
- 11: register
- 12: operations mediator
- 13: group information storage
- 20: communications terminal
- 30: router
- 40: PC
- 41: initial setting part
- 42: activating processor
- 43: video regenerator
- 50: activating apparatus
- 51: initializer
- 52: register
- 53: activating controller
- 54: group information storage
- 100: drive device
- 101: recording medium
- 102: auxiliary storage device
- 103: memory device
- 104: CPU
- 105: interface device
- 501: flash ROM
- 502: RAM
- 503: CPU
- 504: network controller
- B: bus

## Claims

1. An information processing apparatus comprising:
a storage configured to store an IP address of a router in association with identification information corresponding to each of first apparatuses, the router connecting a first network and a second network differing from the first network, the first apparatuses being connected to the second network; and
a transmitter configured to transmit a predetermined packet including the identification information to the IP address of the router via the first network in response to reception of an operation request for a corresponding one of the first apparatuses, wherein the predetermined packet is used for transmitting a magic packet including a MAC address corresponding to the identification information included in the predetermined packet in the second network.

2. The information processing apparatus as claimed in claim 1, wherein
the identification information is assigned to each combination of the first apparatus and a second apparatus serving as a transmission source of the operation request, and wherein
the transmitter transmits the predetermined packet including the identification information to the IP address of the router via the first network in response to reception of the operation request, the IP address of the router being stored in the storage in association with the identification information assigned to the combination of the first apparatus and the second apparatus.

3. An activating apparatus connected to a router, the router connecting a first network and a second network differing from the first network, the activating apparatus being connected to the router via the second network, the activating apparatus comprising:
a storage configured to store identification information and a MAC address corresponding to each of apparatuses connected to the second network; and
a transmitter configured to receive a predetermined packet from the first network via the router, and transmits to the second network a magic packet including the MAC address stored in the storage in association with the identification information included in the predetermined packet.

4. An activating system comprising:
an information processing apparatus including
a first storage configured to store an IP address of a router in association with identification information corresponding to each of first apparatuses, the router connecting a first network and a second network differing from the first network, the first apparatuses being connected to the second network, and
a first transmitter configured to transmit a predetermined packet including the identification information to the IP address of the router via the first network in response to reception of an operation request for a corresponding one of the first apparatuses, the IP address of the router being stored in the first storage in association with the identification information of the corresponding first apparatus; and
an activating apparatus including
a second storage configured to store a MAC address in association with the identification information corresponding to each of the first apparatuses, and
a second transmitter configured to receive the predetermined packet via the router, and transmits to the second network a magic packet including the MAC address stored in the second storage in association with the identification information included in the predetermined packet.

5. An activating method comprising:
causing a computer to execute a process including
storing in a storage an IP address of a router in association with identification information corresponding to each of first apparatuses, the router connecting a first network and a second network differing from the first network, the first apparatuses being connected to the second network; and
transmitting a predetermined packet including the identification information to the IP address of the router via the first network in response to reception of an operation request for a corresponding one of the first apparatuses, wherein the predetermined packet is used for transmitting a magic packet including a MAC address corresponding to the identification information included in the predetermined packet in the second network.

6. The activating method as claimed in claim 5, wherein
the identification information is assigned to each combination of the first apparatus and a second apparatus serving as a transmission source of the operation request, and wherein
the transmitting includes transmitting the predetermined packet including the identification information to the IP address of the router via the first network in response to reception of the operation request, the IP address of the router being stored in the storage in association with the identification information assigned to the combination of the first apparatus and the second apparatus.

7. An activating method comprising:
causing an information processing apparatus to execute
a first storing process of storing in a first storage an IP address of a router in association with identification information corresponding to each of first apparatuses, the router connecting a first network and a second network differing from the first network, the first apparatuses being connected to the second network, and
a first transmitting process of transmitting a predetermined packet including the identification information to the IP address of the router via the first network in response to reception of an operation request for a corresponding one of the first apparatuses, the IP address of the router being stored in the first storage in association with the identification information of the corresponding first apparatus; and
causing an activation apparatus to execute
a second storing process of storing in a second storage a MAC address in association with the identification information corresponding to each of the first apparatuses, and
a second transmitting process of receiving the predetermined packet via the router, and transmitting to the second network a magic packet including the MAC address stored in the second storage in association with the identification information included in the predetermined packet.

8. A program for causing a computer to execute a process, the process comprising:
storing in a storage an IP address of a router in association with identification information corresponding to each of first apparatuses, the router connecting a first network and a second network differing from the first network, the first apparatuses being connected to the second network; and
transmitting a predetermined packet including the identification information to the IP address of the router via the first network in response to reception of an operation request for a corresponding one of the first apparatuses, wherein the predetermined packet is used for transmitting a magic packet including a MAC address corresponding to the identification information included in the predetermined packet in the second network.

9. The program as claimed in claim 8, wherein
the identification information is assigned to each combination of the first apparatus and a second apparatus serving as a transmission source of the operation request, and wherein
the transmitting includes transmitting the predetermined packet including the identification information to the IP address of the router via the first network in response to reception of the operation request, the IP address of the router being stored in the storage in association with the identification information assigned to the combination of the first apparatus and the second apparatus.
